# EUROPÄISCHE PATENTSCHRIFT

(11) **EP 2 256 570 B1**
(45) Veröffentlichungstag und Bekanntmachung des Hinweises auf die Patenterteilung: **07.12.2016**
(21) Anmeldenummer: 10159493.5
(22) Anmeldetag: 09.04.2010
(51) Int. Cl.: G06F 1/30, G06F 11/20

(54) **Verfahren und Steuereinheit zum Betreiben eines flüchtigen Speichers, Schaltungsanordnung und Fahrtenschreiber**
Method and control unit for operating a volatile memory, switching arrangement and odometer
Procédé et unité de commande destinés à faire fonctionner une mémoire volatile, dispositif de commutation et odomètre

(30) Priorität: 11.05.2009 DE 102009020731
(43) Veröffentlichungstag der Anmeldung: 01.12.2010
(73) Patentinhaber: Continental Automotive GmbH, 30165 Hannover (DE)
(72) Erfinder: Kimmich, Franz, 78713 Schramberg (DE); Lindinger, Andreas, 78658 Flözlingen (DE); Rombach, Gerhard, 78098 Triberg (DE)

(56) Entgegenhaltungen:
- EP-A2- 0 385 516
- DE-A1-102004 005 667
- US-A1- 2002 116 651
- US-A1- 2006 133 181
- US-A1- 2006 212 137

## Beschreibung

Die Erfindung betrifft ein Verfahren und eine Steuereinheit zum Betreiben eines flüchtigen Speichers.

Ein digitaler Fahrtenschreiber, der auch als digitaler Tachograph bezeichnet wird, speichert für einen vorgegebenen Zeitraum beispielsweise auf einer fahrergebundenen Chipkarte alle in Frage kommenden Ereignisse, die mit dem Fahrbetrieb in Beziehung stehen. So werden z. B. Lenk-, Arbeits-, Bereitschafts-, Ruhe-, Unterbrechungszeiten gespeichert. Die gesamten Daten können von Kontrollbehorden oder dem Halter des Fahrzeugs entsprechend vorgegebener gesetzlicher Vorschriften digital ausgelesen werden. An die Speicherung dieser Daten werden hohe Anforderungen gestellt.

JP 2001142508 A offenbart eine Schaltungsanordnung mit einem RAM-Speicher, der von seiner Versorgung mittels eines Schaltelementes trennbar ist.

US 2006/0133135 A1 offenbart ein Feld von SRAM-Zellen, das mit einer Steuerelektronik angesteuert wird. Dabei ist eine Spannung zur Versorgung der SRAM-Zellen höher als eine Spannung zur Versorgung der Steuerelektronik.

US 2006/0212137 A1 offenbart ein Verfahren zum Betreiben einer Recheneinheit mit einer flüchtigen Speichereinheit. Im Falle, dass eine Spannung einer Hauptspannungsversorgung der Recheneinheit einen vorgegebenen Grenzwert unterschreitet, wird die Recheneinheit mit einer nachgeordneten Spannungsquelle elektrisch gekoppelt und Daten, die in einem flüchtigen Speicher gespeichert sind, in einem nichtflüchtigen Speicher transferiert. Nach Abschluss des Datentransfers wird die gesamte Recheneinheit von der nachgeordneten Versorgungsspannungsquelle elektrisch entkoppelt.

US 2002/0116651 A1 offenbart eine Fahrzeugrecheneinheit mit einer Notabschaltfunktion. Für eine Datenspeicherung im Falle einer Unterbrechung der Hauptspannungsversorgung werden flüchtige Speicher genutzt, die als SRAM ausgebildet sind. Im Falle, dass die Hauptspannungsversorgung unterbrochen wird oder eine Spannung der Hauptversorgungsspannung unter einem vorgegebenen Grenzwert fällt, werden die flüchtigen Speicher in einen Haltezustand versetzt, bei dem die Speicher eine geringe Stromaufnahme und hochohmige Eingangswiderstände aufweisen, und die flüchtigen Speicher werden mit der Backupbatterie elektrisch gekoppelt. Ferner wird die Backupbatterie von weiteren Komponenten der Fahrzeugrecheneinheit elektrisch isoliert.

Es ist Aufgabe der Erfindung, ein Verfahren, eine Steuereinheit, eine Schaltungsanordnung und einen Fahrtenschreiber zu schaffen, der eine besonders zuverlässige und zugleich stromreduzierte Datenspeicherung ermöglicht.

Die Erfindung zeichnet sich gemäß einem ersten und zweiten Aspekt aus durch ein Verfahren und eine korrespondierende Steuereinheit zum Betreiben eines flüchtigen Speichers, dem ein Versorgungssignal zuführbar ist. Das Versorgungssignal ist entwader als ein erstes Versorgungssignal einer ersten Versorgungssignalquelle oder als ein zweites Versorgungssignal einer zweiten Versorgungssignalquelle ausgebildet. Bei zur Verfügung stehendem erstem Versorgungssignal wird dieses und ansonsten das zweite Versorgungssignal als Versorgungssignal eingesetzt. Das Versorgungssignal ist abhängig von einer Schaltstellung eines Schaltelementes dem flüchtigen Speicher zuführbar. Eine Unterbrechung des ersten Versorgungssignals wird detektiert. Während des detektierten unterbrochenen ersten Versorgungssignals wird die Schaltstellung des Schaltelementes für eine vorgegebene Zeitdauer derart vorgegeben, dass dem flüchtigen Speicher das Versorgungssignal zugeführt ist. Ferner wird während des detektierten unterbrochenen ersten Versorgungssignals nach Ablauf der vorgegebenen Zeitdauer die Schaltstellung des Schaltelementes derart vorgegeben, dass der flüchtige Speicher von dem Versorgungssignal elektrisch entkoppelt ist. Ferner wird das zur Verfügung stehende erste Versorgungssignal detektiert. Der Ablauf der vorgegebenen Zeitdauer wird ignoriert und die Schaltstellung des Schaltelementes derart vorgegeben, dass dem flüchtigen Speicher das Versorgungssignal zugeführt ist, falls die Detektion des zur Verfügung stehenden ersten Versorgungssignals während der vorgegebenen Zeitdauer erfolgt. Dies hat den Vorteil, dass zumindest eine vorgegebene Auswahl von in dem flüchtigen Speicher gespeicherten Daten vor der elektrischen Entkopplung von dem Versorgungssignal gesichert werden kann. So können notwendige Daten, so z. B. Unfalldaten, welche mit hoher Frequenz oder kurz vor einer Unterbrechung anfallen, zuverlässig gespeichert werden. Ferner erhöht dies die Lebensdauer der zweiten Versorgungssignalquelle und kann somit dazu beitragen, einen Austausch der zweiten Versorgungssignalquelle zu vermeiden. Ferner ermöglicht dies bei Unterbrechungen des ersten Versorgungssignals, die kürzer sind als die vorgegebene Zeitdauer, dass Daten in dem flüchtigen Speicher weiterhin vorliegen und somit beispielsweise Startup-Vorgange, in denen Daten erneut in den flüchtigen Speicher kopiert werden müssen, entfallen können.

Das jeweilige Versorgungssignal ist beispielsweise als jeweilige Versorgungsspannung ausgebildet. Vorzugsweise bleibt die Schaltstellung des Schaltelementes vor der Detektion des unterbrochenen ersten Versorgungssignals und während dem vorliegenden unterbrochenen Versorgungssignal zur Versorgung des flüchtigen Speichers unverändert, so dass die in dem flüchtigen Speicher, so z. B, einem SRAM-Speicher, gespeicherten Daten gespeichert bleiben. Der flüchtige Speicher hat den Vorteil, dass häufig anfallende oder sich ändernde Daten schnell und ohne Begrenzung der Schreibzyklen in diesem gespeichert werden können. Ein nichtflüchtiger Speicher weist typischerweise nur eine begrenzte Anzahl an Schreibzyklen auf. Die zweite Versorgungssignalquelle ist vorzugsweise als wiederaufladbarer Energiespeicher ausgebildet.

In einer vorteilhaften Ausgestaltung des ersten und zweiten Aspekts wird eine Temperatur ermittelt, die repräsentativ ist für eine Temperatur am flüchtigen Speicher. Die Zeitdauer wird abhängig von der ermittelten Temperatur vorgegeben. Vorzugsweise ist eine Stromaufnahme des flüchtigen Speichers abhängig von der Temperatur des Speichers, so dass die vorgegebene Zeitdauer geeignet an die Stromaufnahme angepasst und somit ein zuverlässiger Betrieb des flüchtigen Speichers gewährleistet werden kann.

In einer weiteren vorteilhaften Ausgestaltung des ersten und zweiten Aspekts ist der flüchtige Speicher mit einem nichtflüchtigen Speicher gekoppelt. Abhängig von einem vorgegebenen Steuersignal, das repräsentativ ist für einen fehlerfreien Datentransfer von Daten von dem flüchtigen Speicher in den nichtflüchtigen Speicher, wird die Zeitdauer vorgegeber.. Dies ermöglicht eine zuverlässige Sicherung zumindest einer vorgegebenen Auswahl von Daten, die in dem flüchtigen Speicher gespeichert sind.

Die Erfindung zeichnet sich gemäß einem dritten Aspekt aus durch eine Schaltungsanordnung mit dem flüchtigen Speicher und einer Versorgungssignaleinheit, der eingangsseitig das erste und das zweite Versorgungssignal und ausgangsseitig das Versorgungssignal zugeordnet ist. Die Versorgungssignaleinheit ist ausgebildet, bei zur Verfügung stehendem erstem Versorgungssignal dieses und ansonsten das zweite Versorgungssignal ausgangsseitig als Versorgungssignal vorzugeben. Die Schaltungsanordnung umfasst ferner das Schaltelement, dem an seinem ersten Anschluss das Versorgungssignal zugeordnet ist und das mit seinem zweiten Anschluss mit dem flüchtigen Speicher elektrisch gekoppelt ist. Des Weiteren weist die Schaltungsanordnung eine Steuereinheit gemäß dem zweiten Aspekt auf.

In einer vorteilhaften Ausgestaltung des dritten Aspekts ist die Steuereinheit mit der Versorgungssignaleinheit zum Zuführen des Versorgungssignals unabhängig von der Schaltstellung des Schaltelements elektrisch gekoppelt. Dies ermöglicht bei zur Verfügung stehendem oder während des unterbrochenen ersten Versorgungssignals einen zuverlässigen Betrieb der Steuereinheit.

Die Erfindung zeichnet sich gemäß einem vierten Aspekt aus durch einen Fahrtenschreiber in einem Kraftfahrzeug. Der Fahrtenschreiber umfasst eine Schaltungsanordnung gemäß dem dritten Aspekt. Das erste Versorgungssignal ist dabei als Bordnetzspannungssignal des Kraftfahrzeugs ausgebildet. Dies ermöglicht einen zuverlässigen und sicheren Betrieb des Fahrtenschreibers. Das unterbrochene erste Versorgungssignal liegt beispielsweise vor, wenn eine Zündung des Kraftfahrzeugs ausgeschaltet ist oder eine aus einem Unfall resultierende Unterbrechung des Bordnetzspannungssignals vorliegt.

In einer vorteilhaften Ausgestaltung des vierten Aspekts ist die Steuereinheit ausgebildet, abhängig von einem weiteren vorgegebenen Steuersignal, das eine Unfallsituation des Kraftfahrzeugs repräsentiert, den Ablauf der vorgegebenen Zeitdauer zu ignorieren und die Schaltstellung einen flüchtigen Speicher das Versorgungssignal zugeführt ist, falls das erste Versorgungssignal unterbrochen ist. Wird ein Unfall registriert, können aufgrund der dauerhaften Versorgung des flüchtigen Speichers mittels der zweiten Versorgungssignalquelle alle Unfalldaten gespeichert und aufgezeichnet werden. Dabei bleiben die Daten solange in dem flüchtigen Speicher gespeichert, bis die Versorgungssignalquelle entladen ist oder diese fehlerfrei in den nichtflüchtigen Speicher übertragen wurden.

Ausführungsbeispiele der Erfindung sind im Folgenden anhand der schematischen Zeichnungen näher erläutert. Es zeigen:
- Figur 1: Fahrtenschreiber,
- Figur 2: Ablaufdiagramm.
Elemente gleicher Konstruktion oder Funktion sind figurenübergreifend mit den gleichen Bezugszeichen versehen.

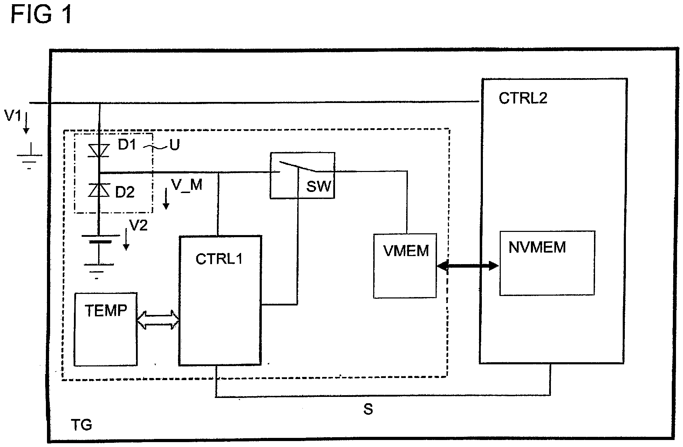

Ein Fahrtenschreiber TG (Figur 1) umfasst eine Schaltungsanordnung mit einer Versorgungssignaleinheit U, einem flüchtigen Speicher VMEM, einer ersten und zweiten Steuereinheit CTRL1, CTRL2, einem Schaltelement SW und einer zweiten Versorgungssignalquelle. Der Fahrtenschreiber TG ist vorzugsweise in einem Kraftfahrzeug angeordnet und in diesem mit einer ersten Versorgungssignalquelle, so z. B. der Batterie des Kraftfahrzeugs, elektrisch gekoppelt. Die zweite Versorgungssignalquelle ist beispielsweise als wiederaufladbarer Energiespeicher ausgebildet. Die erste bzw. zweite Versorgungssignalquelle stellen ein erstes bzw. zweites Versorgungssignal V1, V2 zur Verfügung.

Das erste und zweite Versorgungssignal sind der Versorgungssignaleinheit U eingangsseitig zugeordnet. Die Versorgungssignaleinheit U umfasst eine erste und zweite Diode D1, D2, die derart mit der ersten und zweiten Versorgungssignalquelle elektrisch gekoppelt sind, dass an einem gemeinsamen Anschlusspunkt TP der ersten und zweiten Diode D1, D2 ein Versorgungssignal V_M ausgangsseitig zur Verfügung steht. Die Versorgungssignaleinheit U ist ausgebildet, bei zur Verfügung stehendem ersten Versorgungssignal V1 dieses und ansonsten das zweite Versorgungssignal V2 als Versorgungssignal V_M ausgangsseitig vorzugeben.

Der gemeinsame Anschlusspunkt TP ist mit der ersten Steuereinheit CTRL1 zu dessen Versorgung elektrisch gekoppelt. Ein erster Anschluss des Schaltelementes SW ist mit dem gemeinsame Anschlusspunkt TP und ein zweiter Anschluss des Schaltelements SW ist mit dem flüchtigen Speicher VMEM elektrisch gekoppelt, um bei eingeschalteter Schaltstellung des Schaltelementes SW dem flüchtigen Speicher VMEM das Versorgungssignal V_M zu zuführen.

Die zweite Steuereinheit CTRL2 umfasst einen nichtflüchtigen Speicher NVMEM, so z. B. einen Flash- oder FRAM-Speicher, der mit dem flüchtigen Speicher VMEM elektrisch gekoppelt ist, um gespeicherte Daten zwischen dem flüchtigen und nichtflüchtigen Speicher VMEM, NVMEM zu übertragen. Die erste und zweite Steuereinheit CTRL1, CTRL2 sind über eine Steuersignalleitung elektrisch miteinander gekoppelt, über die ein Steuersignal S von der zweiten zu der ersten Steuereinheit CTRL2, CTRL1 übertragbar ist. Das Steuersignal S ist repräsentativ für einen fehlerfreien Datentransfer von Daten von dem flüchtigen Speicher VMEM in den nichtflüchtigen Speicher NVMEM. Alternativ oder zusätzlich wird mittels der Steuersignalleitung ein weiteres Steuersignal übertragen, das repräsentativ ist für eine detektierte Unfallsituation des Kraftfahrzeugs. Die Detektion der Unfallsituation erfolgt beispielsweise mittels der zweiten Steuereinheit CTRL2.

Die erste Steuereinheit CTRL1 ist ausgebildet, mittels eines Temperatursensors TEMP eine Temperatur am flüchtigen Speicher VMEM zu ermitteln. Eine Stromaufnahme des flüchtigen Speichers VMEM ist typischerweise abhängig von einer Temperatur am flüchtigen Speicher VMEM.

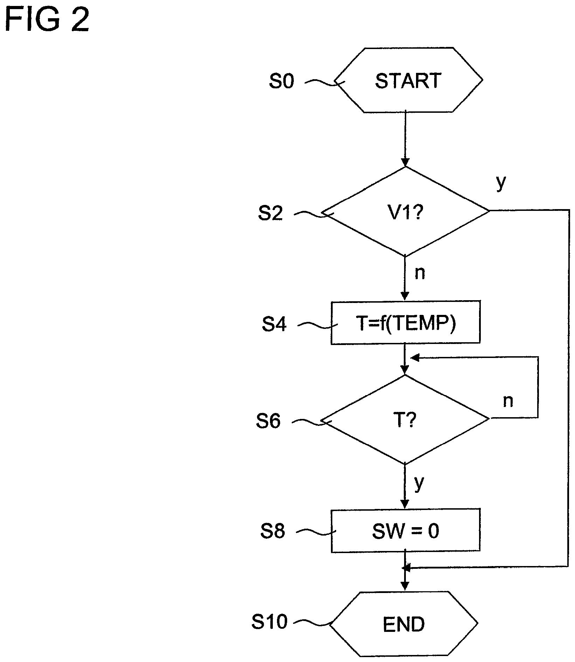

Die erste Steuereinheit CTRL1 ist vorzugsweise ausgebildet, ein Verfahren zum Betreiben des flüchtigen Speichers VMEM (Figur 2) abzuarbeiten. Alternativ kann die erste Steuereinheit CTRL1 auch als Steuereinheit zum Betreiben des flüchtigen Speichers VMEM bezeichnet werden.

Das Verfahren wird in einem Schritt S0 gestartet. Vorzugsweise wird hier das Schaltelement SW eingeschaltet, so z. B. beim Starten des Kraftfahrzeugs. In einem Schritt S2 wird detektiert, ob das erste Versorgungssignal V1 anliegt oder unterbrochen ist. Bei einem anliegenden ersten Versorgungssignal V1 wird das Verfahren in einem Schritt S10 beendet oder alternativ im Schritt S2 erneut ausgeführt. Bei einem unterbrochenen ersten Versorgungssignal V1 wird die Schaltstellung des Schaltelementes SW derart vorgegeben, dass der flüchtige Speicher VMEM mittels der zweiten Diode D2 mit dem zweiten Versorgungssignal V2 beaufschlagt wird. Zusätzlich wird in diesem Schritt die Temperatur am flüchtigen Speicher VMEM ermittelt. In einem Schritt S4 wird eine Zeitdauer T ermittelt, während dessen die Schaltstellung des Schaltelementes SW weiterhin eingeschaltet ist. Die Zeitdauer T kann fest vorgegeben und/oder variabel einstellbar, so z. B. 3 bis 60 min, und/oder abhängig von der ermittelten Temperatur vorgegeben sein. Alternativ oder zusätzlich wird die Zeitdauer T abhängig von dem Steuersignal S vorgegeben. In einem Schritt S6 wird überprüft, ob die vorgegebene Zeitdauer T abgelaufen ist. Alternativ oder zusätzlich wird abhängig von einem detektierten Unfall, der mittels des weiteren Steuersignals signalisiert wird, der Ablauf der Zeitdauer T ignoriert und die Schaltstellung des Schaltelementes SW derart vorgegeben, dass dem flüchtigen Speicher VMEM das Versorgungssignal V_M weiterhin zugeführt ist, auch wenn das erste Versorgungssignal V1 unterbrochen ist. Während der vorgegebenen Zeitdauer T wird in dem Schritt S6 das erste Versorgungssignal V1 ständig überwacht. Liegt das erste Versorgungssignal V1 erneut an, wird das Verfahren in dem Schritt S10 beendet. Ist die vorgegebene Zeitdauer T abgelaufen, und das erste Versorgungssignal V1 ist weiterhin unterbrochen, wird in einem Schritt S8 die Schaltstellung des Schaltelement SW derart vorgegeben, dass er flüchtige Speicher VMEM von dem Versorgungssignal V_M elektrisch entkoppelt ist. In dem Schritt S10 wird das Verfahren beendet oder alternativ in dem Schritt S2 erneut abgearbeitet.

## Patentansprüche

1. Verfahren zum Betreiben eines flüchtigen Speichers (VMEM) eines Fahrtenschreibers (TG), wobei dem flüchtigen Speicher ein Versorgungssignal (V_M) zuführbar ist und das Versorgungssignal (V_M) entweder als ein erstes Versorgungssignal (V1) einer ersten Versorgungssignalquelle oder als ein zweites Versorgungssignal (V2) einer zweiten Versorgungssignalquelle ausgebildet ist, wobei bei zur Verfügung stehendem ersten Versorgungssignal (V1) dieses als Versorgungssignal (V_M) und ansonsten das zweite Versorgungssignal (V2) als Versorgungssignal (V_M) eingesetzt wird, wobei das Versorgungssignal (V_M) abhängig von einer Schaltstellung eines Schaltelementes (SW) dem flüchtigen Speicher (VMEM) zuführbar ist, bei dem eine Unterbrechung des ersten Versorgungssignals (V1) detektiert wird,
**dadurch gekennzeichnet, dass**
- während des detektierten unterbrochenen ersten Versorgungssignals (V1):
-- die Schaltstellung des Schaltelementes (SW) für eine vorgegebene Zeitdauer (T) derart vorgegeben wird, dass dem flüchtigen Speicher (VMEM) das Versorgungssignal (V_M) zugeführt ist,
-- nach Ablauf der vorgegebenen Zeitdauer (T) die Schaltstellung des Schaltelementes (SW) derart vorgegeben wird, dass der flüchtige Speicher (VMEM) von dem Versorgungssignal (V_M) elektrisch entkoppelt ist,
- wenn das zur Verfügung stehende erste Versorgungssignal (V1) detektiert wird,
der Ablauf der vorgegebenen Zeitdauer (T) ignoriert wird und die Schaltstellung des Schaltelementes (SW) derart vorgegeben wird, dass dem flüchtigen Speicher (VMEM) das Versorgungssignal (V_M) zugeführt ist, falls die Detektion des zur Verfügung stehenden ersten Versorgungssignals (V1) während der vorgegebenen Zeitdauer (T) erfolgt.

2. Verfahren nach Anspruch 1, bei dem
- eine Temperatur ermittelt wird, die repräsentativ ist für eine Temperatur am flüchtigen Speicher (VMEM),
- die Zeitdauer (T) abhängig von der ermittelten Temperatur (TEMP) vorgegeben wird.

3. Verfahren nach Anspruch 1 oder 2, bei dem der flüchtige Speicher (VMEM) mit einem nichtflüchtigen Speicher (NVMEM) gekoppelt ist und abhängig von einem vorgegebenen Steuersignal (S), das repräsentativ ist für einen fehlerfreien Datentransfer von Daten von dem flüchtigen Speicher (VMEM) in den nichtflüchtigen Speicher (NVMEM), die Zeitdauer (T) vorgegeben wird.

4. Steuereinheit (CTRL1) zum Betreiben eines flüchtigen Speichers (VMEM) eines Fahrtenschreibers (TG), wobei dem flüchtigen Speicher ein Versorgungssignal (V_M) zuführbar ist und das Versorgungssignal (V_M) entweder als ein erstes Versorgungssignal (V1) einer ersten Versorgungssignalquelle oder als ein zweites Versorgungssignal (V2) einer zweiten Versorgungssignalquelle ausgebildet ist, wobei bei zur Verfügung stehendem ersten Versorgungssignal (V1) dieses als Versorgungssignal (V_M) und ansonsten das zweite Versorgungssignal (V2) als Versorgungssignal (V_M) eingesetzt wird, wobei das Versorgungssignal (V_M) abhängig von einer Schaltstellung eines Schaltelementes (SW) dem flüchtigen Speicher (VMEM) zuführbar ist, wobei die Steuereinheit (CTRL1) ausgebildet ist,
- eine Unterbrechung des ersten Versorgungssignals (V1) zu detektieren, **dadurch gekennzeichnet, dass**
- während des detektierten unterbrochenen ersten Versorgungssignals (V1):
-- die Schaltstellung des Schaltelementes (SW) für eine vorgegebene Zeitdauer (T) derart vorzugeben, dass dem flüchtigen Speicher (VMEM) das Versorgungssignal (V_M) zugeführt ist,
-- nach Ablauf der vorgegebenen Zeitdauer (T) die Schaltstellung des Schaltelementes (SW) derart vorzugeben, dass der flüchtige Speicher (VMEM) von dem Versorgungssignal (V_M) elektrisch entkoppelt ist
- wenn das zur Verfügung stehende erste Versorgungssignal (V1) detektiert wird,
der Ablauf der vorgegebenen Zeitdauer (T) ignoriert wird und die Schaltstellung des Schaltelementes (SW) derart vorgegeben wird, dass dem flüchtigen Speicher (VMEM) das Versorgungssignal (V_M) zugeführt ist, falls die Detektion des zur Verfügung stehenden ersten Versorgungssignals (V1) während der vorgegebenen Zeitdauer (T) erfolgt.

5. Schaltungsanordnung für einen Fahrtenschreiber in einem Kraftfahrzeug umfassend
- einen flüchtigen Speicher (VMEM),
- eine Versorgungssignaleinheit (U), der eingangsseitig das erste und das zweite Versorgungssignal (V1, V2) und ausgangsseitig das Versorgungssignal (V_M) zugeordnet ist, wobei die Versorgungssignaleinheit (U) ausgebildet ist, bei zur Verfügung stehendem ersten Versorgungssignal (V1) dieses ausgangsseitig als Versorgungssignal (V_M) und ansonsten das zweite Versorgungssignal (V2) ausgangsseitig als Versorgungssignal (V_M) vorzugeben,
- ein Schaltelement (SW), dem an seinem ersten Anschluss das Versorgungssignal (V_M) zugeordnet ist und das mit seinem zweiten Anschluss mit dem flüchtigen Speicher (VMEM) elektrisch gekoppelt ist,
- eine Steuereinheit (CTRL1) gemäß Patentanspruch 4.

6. Schaltungsanordnung nach Anspruch 5, bei der die Steuereinheit (CTRL1) mit der Versorgungssignaleinheit (U) zum Zuführen des Versorgungssignals (V_M) unabhängig von der Schaltstellung des Schaltelements (SW) elektrisch gekoppelt ist.

7. Schaltungsanordnung nach Anspruch 5 oder 6, wobei das erste Versorgungssignal (V1) als Bordnetzspannungssignal des Kraftfahrzeugs ausgebildet ist.

8. Schaltungsanordnung nach einem der vorstehenden Ansprüche 5 bis 7, bei der die Steuereinheit (CTRL1) ausgebildet ist, abhängig von einem weiteren vorgegebenen Steuersignal, das eine Unfallsituation des Kraftfahrzeugs repräsentiert, den Ablauf der vorgegebenen Zeitdauer (T) zu ignorieren und die Schaltstellung des Schaltelementes (SW) derart vorzugeben, dass dem flüchtigen Speicher (VMEM) das Versorgungssignal (V_M) zugeführt ist, falls das erste Versorgungssignal (V1) unterbrochen ist.

## Claims

1. Method for operating a volatile memory (VMEM) of a trip recorder (TG), wherein the volatile memory can be supplied with a supply signal (V_M) and the supply signal (V_M) is arranged either as a first supply signal (V1) of a first supply signal source or as a second supply signal (V2) of a second supply signal source, wherein in the case of an available first supply signal (V1), the latter is used as supply signal (V_M) and otherwise the second supply signal (V2) is used as supply signal (V_M), wherein the supply signal (V_M) can be supplied to the volatile memory (VMEM) in dependence on a switch position of a switching element (SW), wherein an interruption of the first supply signal (V1) is detected,
**characterized in that**
- during the detected interrupted first supply signal (V1):
-- the switch position of the switching element (SW) is predetermined for a predetermined period of time (T) in such a manner that the supply signal (V_M) is supplied to the volatile memory (VMEM),
-- after expiry of the predetermined period of time (T), the switch position of the switching element (SW) is predetermined in such a manner that the volatile memory (VMEM) is decoupled electrically from the supply signal (V_M),
- if the available first supply signal (V1) is detected, the expiry of the predetermined period of time (T) is ignored and the switch position of the switching element (SW) is predetermined in such a manner that the supply signal (V_M) is supplied to the volatile memory (VMEM) if the available first supply signal (V1) is detected during the predetermined period of time (T).

2. Method according to Claim 1, in which
- a temperature is determined which is representative of a temperature at the volatile memory (VMEM),
- the period of time (T) is predetermined in dependence on the temperature (TEMP) determined.

3. Method according to Claim 1 or 2, in which the volatile memory (VMEM) is coupled to a nonvolatile memory (VMEM) and the period of time (T) is predetermined in dependence on a predetermined control signal (S) which is representative of an error-free data transfer of data from the volatile memory (VMEM) into the nonvolatile memory (NVMEM).

4. Control unit (CTRL1) for operating a volatile memory (VMEM) of a trip recorder (TG), wherein the volatile memory can be supplied with a supply signal (V_M) and the supply signal (V_M) is arranged either as a first supply signal (V1) of a first supply signal source or as a second supply signal (V2) of a second supply signal source, wherein in the case of an available first supply signal (V1), the latter is used as supply signal (V_M) and otherwise the second supply signal (V2) is used as supply signal (V_M), wherein the supply signal (V_M) can be supplied to the volatile memory (VMEM) in dependence on a switch position of a switching element (SW), the control unit (CTRL1) being arranged to
- detect an interruption of the first supply signal (V1), **characterized in that**
- during the detected interrupted first supply signal (V1) :
-- predetermine the switch position of the switching element (SW) for a predetermined period of time (T) in such a manner that the supply signal (V_M) is supplied to the volatile memory (VMEM),
-- after expiry of the predetermined period of time (T), predetermine the switch position of the switching element (SW) in such a manner that the volatile memory (VMEM) is decoupled electrically from the supply signal (V_M)
- if the available first supply signal (V1) is detected, the expiry of the predetermined period of time (T) is ignored and the switch position of the switching element (SW) is predetermined in such a manner that the supply signal (V_M) is supplied to the volatile memory (VMEM) if the available first supply signal (V1) is detected during the predetermined period of time (T).

5. Circuit arrangement for a trip recorder in a motor vehicle comprising
- a volatile memory (VMEM),
- a supply signal unit (U) to which the first and the second supply signal (V1, V2) is allocated at the input end and the supply signal (V_M) is allocated at the output end, the supply signal unit (U) being arranged to predetermine, in the case of an available first supply signal (V1), the latter as supply signal (V_M) at the output end or otherwise the second supply signal (V2) at the output end as supply signal (V_M),
- a switching element (SW) to which the supply signal (V_M) is allocated at its first terminal and which is coupled electrically to the volatile memory (VMEM) with its second terminal,
- a control unit (CTRL1) according to Patent Claim 4.

6. Circuit arrangement according to Claim 5, in which the control unit (CTRL1) is coupled electrically to the supply signal unit (U) for supplying the supply signal (V_M) independently of the switch position of the switching element (SW).

7. Circuit arrangement according to Claim 5 or 6, wherein the first supply signal (V1) is arranged as vehicle-system voltage signal of the motor vehicle.

8. Circuit arrangement according to any of the preceding Claims 5 to 7, in which the control unit (CTRL1) is arranged, in dependence on a further predetermined control signal which represents an accident situation of the motor vehicle, to ignore the expiry of the predetermined period of time (T) and to predetermine the switch position of the switching element (SW) in such a manner that the supply signal (V_M) is supplied to the volatile memory (VMEM) if the first supply signal (V1) is interrupted.

## Revendications

1. Procédé de mise en fonctionnement d'une mémoire volatile (VMEM) d'un tachygraphe (TG), dans lequel un signal d'alimentation (V_M) peut être délivré à la mémoire volatile et le signal d'alimentation (V_M) est réalisé soit sous la forme d'un premier signal d'alimentation (V1) d'une première source de signal d'alimentation soit sous la forme d'un deuxième signal d'alimentation (V2) d'une deuxième source de signal d'alimentation, dans lequel, lorsque le premier signal d'alimentation (V1) est disponible, celui-ci est utilisé en tant que signal d'alimentation (V_M) et dans le cas contraire, le deuxième signal d'alimentation (V2) est utilisé en tant que signal d'alimentation (V_M), dans lequel le signal d'alimentation (V_M) peut être délivré à la mémoire volatile (VMEM) en fonction d'une position de commutation d'un élément de commutation (SW), dans lequel une interruption du premier signal d'alimentation (V1) est détectée,
**caractérisé en ce que**
- pendant la détection du premier signal d'alimentation (V1) interrompue :
-- la position de commutation de l'élément de commutation (SW) est prédéterminée pendant un intervalle de temps prédéterminé (T) de manière à ce que le signal d'alimentation (V_M) soit délivré à la mémoire volatile (VMEM),
-- après que l'intervalle de temps prédéterminé (T) se soit écoulé, la position de commutation de l'élément de commutation (SW) est prédéterminée de manière à ce que la mémoire volatile (VMEM) soit électriquement découplée du signal d'alimentation (V_M),
- lorsque le premier signal d'alimentation (V1) disponible est détecté,
- l'écoulement de l'intervalle de temps prédéterminé (T) est ignoré et la position de commutation de l'élément de commutation (SW) est prédéterminée de manière à ce que le signal d'alimentation (V_M) soit délivré à la mémoire volatile (VMEM), dans le cas où la détection du premier signal d'alimentation (V1) disponible se produit pendant l'intervalle de temps prédéterminé (T).

2. Procédé selon la revendication 1, dans lequel
- on détermine une température qui est représentative d'une température au niveau de la mémoire volatile (VMEM),
- l'intervalle de temps (T) est prédéterminé en fonction de la température déterminée (TEMP).

3. Procédé selon la revendication 1 ou 2, dans lequel la mémoire volatile (VMEM) est couplée à une mémoire non volatile (NVMEM) et l'intervalle de temps (T) est prédéterminé en fonction d'un signal de commande prédéterminé (S) qui est représentatif d'un transfert de données sans erreurs de données de la mémoire volatile (VMEM) vers la mémoire non volatile (NVMEM).

4. Unité de commande (CTRL1) destinée à mettre en fonctionnement une mémoire volatile (VMEM) d'un tachygraphe (TG), dans lequel un signal d'alimentation (V_M) peut être délivré à la mémoire volatile et le signal d'alimentation (V_M) est réalisé soit sous la forme d'un premier signal d'alimentation (V1) d'une première source de signal d'alimentation soit sous la forme d'un deuxième signal d'alimentation (V2) d'une deuxième source de signal d'alimentation,
dans lequel, lorsque le premier signal d'alimentation (V1) est disponible, celui-ci est utilisé en tant que signal d'alimentation (V_M) et dans le cas contraire, le deuxième signal d'alimentation (V2) est utilisé en tant que signal d'alimentation (V_M), dans lequel le signal d'alimentation (V_M) peut être délivré à la mémoire volatile (VMEM) en fonction d'une position de commutation d'un élément de commutation (SW), dans lequel l'unité de commande (CTRL1) est réalisée de manière à
- détecter une interruption du premier signal d'alimentation (V1),
**caractérisé en ce que**
- pendant la détection du premier signal d'alimentation (V1) interrompue :
-- la position de commutation de l'élément de commutation (SW) pendant un intervalle de temps prédéterminé (T) est prédéterminée de manière à ce que le signal d'alimentation (V_M) soit délivré à la mémoire volatile (VMEM),
-- après que l'intervalle de temps prédéterminé (T) se soit écoulé, la position de commutation de l'élément de commutation (SW) est prédéterminée de manière à ce que la mémoire volatile (VMEM) soit découplée électriquement du signal d'alimentation (V_M),
- lorsque le premier signal d'alimentation (V1) disponible est détecté,
- l'écoulement de l'intervalle de temps prédéterminé (T) est ignoré et la position de commutation de l'élément de commutation (SW) est prédéterminée de manière à ce que le signal d'alimentation (V_M) soit délivré à la mémoire volatile (VMEM), dans le cas où la détection du premier signal d'alimentation (V1) disponible se produit pendant l'intervalle de temps prédéterminé (T).

5. Dispositif de commutation destiné à un tachymètre dans un véhicule, comprenant :
- une mémoire volatile (VMEM),
- une unité à signal d'alimentation (U), qui est associée, du côté de l'entrée aux premier et deuxième signaux d'alimentation (V1, V2) et, du côté de la sortie, au signal d'alimentation (V_M), dans lequel l'unité à signal d'alimentation (U) est réalisée, lorsque le premier signal d'alimentation (V1) est disponible, pour prédéterminer celui-ci du côté de la sortie en tant que signal d'alimentation (V_M) et, dans le cas contraire, pour prédéterminer le deuxième signal d'alimentation (V2) du côté de la sortie en tant que signal d'alimentation (V_M),
- un élément de commutation (SW) auquel le signal d'alimentation (V_M) est associé au niveau de sa première borne et qui est électriquement couplé par sa deuxième borne à la mémoire volatile (VMEM),
- une unité de commande (CTRL1) selon la revendication 4.

6. Dispositif de commutation selon la revendication 5, dans lequel l'unité de commande (CTRL1) est électriquement couplée à l'unité à signal d'alimentation (U) pour délivrer le signal d'alimentation (V_M) indépendamment de la position de commutation de l'élément de commutation (SW).

7. Dispositif de commutation selon la revendication 5 ou 6, dans lequel le premier signal d'alimentation (V1) est réalisé sous la forme d'un signal de tension de réseau de bord du véhicule.

8. Dispositif de commutation selon l'une quelconque des revendications 5 à 7 précédentes, dans lequel l'unité de commande (CTRL1) est réalisée de manière à ignorer, en fonction d'un autre signal de commande prédéterminé qui représente une situation d'accident du véhicule automobile, l'écoulement de l'intervalle de temps prédéterminé (T) et pour prédéterminer la position de commutation de l'élément de commutation (SW) de manière à ce que le signal d'alimentation (V_M) soit délivré à la mémoire volatile (VMEM), dans le cas où le premier signal d'alimentation (V1) est interrompu.
